# EUROPEAN PATENT APPLICATION

(11) **EP 3 965 043 A1**
(43) Date of publication of application: **09.03.2022**
(21) Application number: 21192135.8
(22) Date of filing: 19.08.2021
(51) Int. Cl.: G06Q 30/00, B60W 60/00, G06Q 10/06, G01C 21/34, G01C 21/36, G06N 3/02

(54) **AUTOMATED AUTONOMOUS VEHICLE RECOMMENDATIONS BASED ON PERSONALIZED TRANSITION TOLERANCE**

(30) Priority: 27.08.2020 US 202063071164 P; 05.11.2020 US 202017090525
(71) Applicant: HERE Global B.V., 5611 ZT Eindhoven (NL)
(72) Inventor: BEAUREPAIRE, Jerome, 10715 Berlin (DE); STENNETH, Leon, Chicago, 60608 (US); YOUNG, Jeremy Michael, Chicago, 60642 (US)
(74) Representative: Potter Clarkson

(57) **Abstract**

A method, apparatus and computer program product are provided for generating recommendations of autonomous vehicles that satisfy a personalized autonomous transition tolerance. In context of a method, the method receives a route request associated with a user and determines a personalized vehicle recommendation of one or more autonomous vehicles for the user based upon historical data associated with the user regarding prior vehicle selections including historical data relating to an autonomous transition tolerance to changes in autonomy level of a vehicle during traversal of a route. The method also causes transmission of the personalized vehicle recommendation to a user device associated with the user.

## Description

### CROSS-REFERENCE TO RELATED APPLICATIONS

This application claims the benefit of U.S. Provisional Patent Application No. 63/071,164, filed August 27, 2020, the entire contents of which are incorporated herein by reference.

### TECHNOLOGICAL FIELD

An example embodiment relates generally to a method, apparatus and computer program product for generating recommendations for autonomous vehicles and, more particularly, for generating recommendations of autonomous vehicles that satisfy a personalized autonomous transition tolerance.

### BACKGROUND

An autonomous vehicle is a vehicle including automated mechanisms for performing one or more aspects of vehicle control that have been conventionally performed by the driver. As autonomous vehicles are adopted, several benefits may be realized. For example, vehicle collisions may be reduced because computers can perform driving tasks more consistently and make fewer errors than human operators.

Autonomous vehicles may exhibit different levels of autonomy. Some autonomous vehicles may be equipped with autonomous functionalities such as lane keep assist and cruise control, but may lack the ability to autonomously control steering, accelerating, and braking. Other vehicles may be fully autonomous and able to self-drive with or without an occupant in the vehicle.

Certain regions along a route may influence autonomy levels. For example, in some regions, a vehicle may be able to function at a higher level of autonomy (e.g., self-drive), while in other regions, the vehicle may be required to function at a lower level of autonomy (e.g., require driver intervention and/or control). In this regard, a person that commonly utilizes autonomous vehicles may be comfortable with certain levels of autonomy and uncomfortable with others.

### BRIEF SUMMARY

A method, apparatus and computer program product are therefore provided in accordance with an example embodiment in order to facilitate improved autonomous vehicle selection by generating recommendations of autonomous vehicles that satisfy a personalized autonomous transition tolerance. By identifying and determining parameters of autonomous vehicles historically utilized and routes historically traversed by a user, suitable autonomous vehicles may be predicted and recommended for a user and a preferred route may be identified in a more efficient manner, thereby leading to reduced network load and an overall improved passenger experience.

In an example embodiment, an apparatus is provided that includes at least one processor and at least one memory storing computer program code with the at least one memory and the computer program code configured to, with the processor, cause the apparatus to at least receive a route request comprising an origin location and a destination location, the route request indicative of a route to be traversed by a user in an autonomous vehicle. The at least one memory and the computer program code are also configured to, with the processor, cause the apparatus to, based at least on the route request, determine a personalized vehicle recommendation of the autonomous vehicle for the user based upon historical data associated with the user regarding prior vehicle selections including historical data relating to an autonomous transition tolerance to changes in autonomy level of a vehicle during traversal of a route. The at least one memory and the computer program code are also configured to, with the processor, cause the apparatus to cause transmission of the personalized vehicle recommendation to a user device associated with the user.

The at least one memory and the computer program code of an example embodiment configured to determine a personalized vehicle recommendation for the user are further configured to, with the processor, cause the apparatus to provide data associated with the route request to a machine learning model, the machine learning model trained in accordance with the historical data associated with the user, and predict, utilizing the machine learning model and the personalized vehicle recommendation determined by the machine learning model, one or more vehicles the user would select to traverse the route.

In some embodiments of the apparatus, the historical data comprises user profile data and historical route traversal data from one or more prior instances in which the one or more routes were traversed in an autonomous vehicle. In some embodiments of the apparatus, the historical route traversal data comprises, for a respective route of the one or more routes, one or more of a route transition score, a total number of autonomous transition regions of the respective route, an average wait time, a maximum wait time, an average number of vehicles within one or more autonomous transition regions of the respective route, a maximum number of vehicles within one or more autonomous transition regions of the respective route, a maximum autonomous transition index value, an autonomous vehicle transition capability, a monetary cost of one or more respective autonomous vehicles to navigate the respective route, or a number of autonomous vehicles selected for the respective route.

The at least one memory and the computer program code of an example embodiment are further configured to, with the processor, cause the apparatus to perform a normalization of at least a portion of the historical route traversal data prior to the determination of the personalized vehicle recommendation for the user. The at least one memory and the computer program code of an example embodiment are further configured to, with the processor, cause the apparatus to determine a minimum amount of historical route traversal data to be used in the determination of personalized vehicle recommendation for the user.

The at least one memory and the computer program code of an example embodiment are further configured to, with the processor, cause the apparatus to, in accordance with a determination that the historical data of the user fails to satisfy a predefined threshold, determine one or more user profiles of one or more other users based upon a relationship between user profile data of the user and user profile data of the one or more other users, wherein determining the personalized vehicle recommendation for the user is further based on historical data associated with the one or more user profiles.

In an example embodiment, a method is provided that includes receiving a route request comprising an origin location and a destination location, the route request indicative of a route to be traversed by a user in an autonomous vehicle. The method also includes, based at least on the route request, determining a personalized vehicle recommendation of the autonomous vehicle for the user based upon historical data associated with the user regarding prior vehicle selections including historical data relating to an autonomous transition tolerance to changes in autonomy level of a vehicle during traversal of a route. The method also includes causing transmission of the personalized vehicle recommendation to a user device associated with the user.

In some embodiments of the method, determining a personalized vehicle recommendation for the user further comprises providing data associated with the route request to a machine learning model, the machine learning model trained in accordance with the historical data associated with the user. The method of an example embodiment also includes predicting, utilizing the machine learning model and the personalized vehicle recommendation determined by the machine learning model, one or more vehicles the user would select to traverse the route.

In some embodiments of the method, the historical data comprises user profile data and historical route traversal data from one or more prior instances in which the one or more routes were traversed in an autonomous vehicle. In some embodiments of the method, the historical route traversal data comprises, for a respective route of the one or more routes, one or more of a route transition score, a total number of autonomous transition regions of the respective route, an average wait time, a maximum wait time, an average number of vehicles within one or more autonomous transition regions of the respective route, a maximum number of vehicles within one or more autonomous transition regions of the respective route, a maximum autonomous transition index value, an autonomous vehicle transition capability, a monetary cost of one or more respective autonomous vehicles to navigate the respective route, or a number of autonomous vehicles selected for the respective route.

The method of an example embodiment also includes performing a normalization of at least a portion of the historical route traversal data prior to the determination of the personalized vehicle recommendation for the user. The method of an example embodiment also includes determining a minimum amount of historical route traversal data to be used in the determination of personalized vehicle recommendation for the user.

The method of an example embodiment also includes, in accordance with a determination that the historical data of the user fails to satisfy a predefined threshold, determining one or more user profiles of one or more other users based upon a relationship between user profile data of the user and user profile data of the one or more other users, wherein determining the personalized vehicle recommendation for the user is further based on historical data associated with the one or more user profiles.

In a further example embodiment, a computer program product is provided that includes a non-transitory computer readable medium having program code portions stored thereon with the program code portions being configured, upon execution, to receive a route request comprising an origin location and a destination location, the route request indicative of a route to be traversed by a user in an autonomous vehicle. The program code portions are also configured to, based at least on the route request, determine a personalized vehicle recommendation of the autonomous vehicle for the user based upon historical data associated with the user regarding prior vehicle selections including historical data relating to an autonomous transition tolerance to changes in autonomy level of a vehicle during traversal of a route. The program code portions are also configured to cause transmission of the personalized vehicle recommendation to a user device associated with the user.

The program code portions of an example embodiment configured to determine a personalized vehicle recommendation for the user are also configured to provide data associated with the route request to a machine learning model, the machine learning model trained in accordance with the historical data associated with the user, and predict, utilizing the machine learning model and the personalized vehicle recommendation determined by the machine learning model, one or more vehicles the user would select to traverse the route.

In some embodiments of the computer program product, the historical data comprises user profile data and historical route traversal data from one or more prior instances in which the one or more routes were traversed in an autonomous vehicle. In some embodiments of the computer program product, the historical route traversal data comprises, for a respective route of the one or more routes, one or more of a route transition score, a total number of autonomous transition regions of the respective route, an average wait time, a maximum wait time, an average number of vehicles within one or more autonomous transition regions of the respective route, a maximum number of vehicles within one or more autonomous transition regions of the respective route, a maximum autonomous transition index value, an autonomous vehicle transition capability, a monetary cost of one or more respective autonomous vehicles to navigate the respective route, or a number of autonomous vehicles selected for the respective route.

The program code portions of an example embodiment are also configured to perform a normalization of at least a portion of the historical route traversal data prior to the determination of the personalized vehicle recommendation for the user. The program code portions of an example embodiment are also configured to determine a minimum amount of historical route traversal data to be used in the determination of personalized vehicle recommendation for the user.

The program code portions of an example embodiment are also configured to, in accordance with a determination that the historical data of the user fails to satisfy a predefined threshold, determine one or more user profiles of one or more other users based upon a relationship between user profile data of the user and user profile data of the one or more other users, wherein determining the personalized vehicle recommendation for the user is further based on historical data associated with the one or more user profiles.

In an example embodiment, an apparatus is provided that includes means for receiving a route request comprising an origin location and a destination location, the route request indicative of a route to be traversed by a user in an autonomous vehicle. The apparatus also includes means for, based at least on the route request, determining a personalized vehicle recommendation of the autonomous vehicle for the user based upon historical data associated with the user regarding prior vehicle selections including historical data relating to an autonomous transition tolerance to changes in autonomy level of a vehicle during traversal of a route. The apparatus also includes means for causing transmission of the personalized vehicle recommendation to a user device associated with the user.

In some embodiments of the apparatus, the means for determining a personalized vehicle recommendation for the user further includes means for providing data associated with the route request to a machine learning model, the machine learning model trained in accordance with the historical data associated with the user. The apparatus of an example embodiment also includes means for predicting, utilizing the machine learning model and the personalized vehicle recommendation determined by the machine learning model, one or more vehicles the user would select to traverse the route.

In some embodiments of the apparatus, the historical data comprises user profile data and historical route traversal data from one or more prior instances in which the one or more routes were traversed in an autonomous vehicle. In some embodiments of the apparatus, the historical route traversal data comprises, for a respective route of the one or more routes, one or more of a route transition score, a total number of autonomous transition regions of the respective route, an average wait time, a maximum wait time, an average number of vehicles within one or more autonomous transition regions of the respective route, a maximum number of vehicles within one or more autonomous transition regions of the respective route, a maximum autonomous transition index value, an autonomous vehicle transition capability, a monetary cost of one or more respective autonomous vehicles to navigate the respective route, or a number of autonomous vehicles selected for the respective route.

The apparatus of an example embodiment also includes means for performing a normalization of at least a portion of the historical route traversal data prior to the determination of the personalized vehicle recommendation for the user. The apparatus of an example embodiment also includes means for determining a minimum amount of historical route traversal data to be used in the determination of personalized vehicle recommendation for the user.

The apparatus of an example embodiment also includes means for, in accordance with a determination that the historical data of the user fails to satisfy a predefined threshold, determining one or more user profiles of one or more other users based upon a relationship between user profile data of the user and user profile data of the one or more other users, wherein determining the personalized vehicle recommendation for the user is further based on historical data associated with the one or more user profiles.

In a further example embodiment, a method is provided including receiving a route request comprising an origin location and a destination location, the route request indicative of a route to be traversed by a user in an autonomous vehicle. The method also includes determining, based at least on the route request, a plurality of candidate routes. The method also includes, based at least on the route request, determining a personalized vehicle recommendation of the autonomous vehicle for the user based upon an autonomous transition tolerance to changes in autonomy level of a vehicle during traversal of a route. The method also includes, based on the personalized vehicle recommendation, determining a route recommendation comprising at least one of the plurality of candidate routes. The method also includes causing transmission of at least one of the personalized vehicle recommendation or the route recommendation to a user device associated with the user.

In some embodiments of the method, determining a personalized vehicle recommendation for the user also includes providing data associated with the route request to a machine learning model, the machine learning model trained in accordance with the historical data associated with the user, and predicting, utilizing the machine learning model and the personalized vehicle recommendation determined by the machine learning model, one or more vehicles the user would select to traverse the route.

In some embodiments of the method, the personalized vehicle recommendation is further based on historical data comprising user profile data and historical route traversal data from one or more prior instances in which the one or more routes were traversed in an autonomous vehicle. In some embodiments of the method, the historical route traversal data comprises, for a respective route of the one or more routes, one or more of: a route transition score, a total number of autonomous transition regions of the respective route, an average wait time, a maximum wait time, an average number of vehicles within one or more autonomous transition regions of the respective route, a maximum number of vehicles within one or more autonomous transition regions of the respective route, a maximum autonomous transition index value, an autonomous vehicle transition capability, a monetary cost of one or more respective autonomous vehicles to navigate the respective route, or a number of autonomous vehicles selected for the respective route.

The method of an example embodiment also includes performing a normalization of at least a portion of the historical route traversal data prior to the determination of the personalized vehicle recommendation for the user. The method of an example embodiment also includes determining a minimum amount of historical route traversal data to be used in the determination of personalized vehicle recommendation for the user. The method of an example embodiment also includes, in accordance with a determination that the historical data of the user fails to satisfy a predefined threshold, determining one or more user profiles of one or more other users based upon a relationship between user profile data of the user and user profile data of the one or more other users, wherein determining the personalized vehicle recommendation for the user is further based on historical route traversal data associated with the one or more user profiles.

In a further example embodiment, an apparatus is provided including means for receiving a route request comprising an origin location and a destination location, the route request indicative of a route to be traversed by a user in an autonomous vehicle. The apparatus also includes means for determining, based at least on the route request, a plurality of candidate routes. The apparatus also includes means for, based at least on the route request, determining a personalized vehicle recommendation of the autonomous vehicle for the user based upon an autonomous transition tolerance to changes in autonomy level of a vehicle during traversal of a route. The apparatus also includes means for, based on the personalized vehicle recommendation, determining a route recommendation comprising at least one of the plurality of candidate routes. The apparatus also includes means for causing transmission of at least one of the personalized vehicle recommendation or the route recommendation to a user device associated with the user.

In some embodiments of the apparatus, the means for determining a personalized vehicle recommendation for the user also includes means for providing data associated with the route request to a machine learning model, the machine learning model trained in accordance with the historical data associated with the user, and means for predicting, utilizing the machine learning model and the personalized vehicle recommendation determined by the machine learning model, one or more vehicles the user would select to traverse the route.

In some embodiments of the apparatus, the personalized vehicle recommendation is further based on historical data comprising user profile data and historical route traversal data from one or more prior instances in which the one or more routes were traversed in an autonomous vehicle. In some embodiments of the apparatus, the historical route traversal data comprises, for a respective route of the one or more routes, one or more of: a route transition score, a total number of autonomous transition regions of the respective route, an average wait time, a maximum wait time, an average number of vehicles within one or more autonomous transition regions of the respective route, a maximum number of vehicles within one or more autonomous transition regions of the respective route, a maximum autonomous transition index value, an autonomous vehicle transition capability, a monetary cost of one or more respective autonomous vehicles to navigate the respective route, or a number of autonomous vehicles selected for the respective route.

The apparatus of an example embodiment also includes means for performing a normalization of at least a portion of the historical route traversal data prior to the determination of the personalized vehicle recommendation for the user. The apparatus of an example embodiment also includes means for determining a minimum amount of historical route traversal data to be used in the determination of personalized vehicle recommendation for the user. The apparatus of an example embodiment also includes means for, in accordance with a determination that the historical data of the user fails to satisfy a predefined threshold, determining one or more user profiles of one or more other users based upon a relationship between user profile data of the user and user profile data of the one or more other users, wherein determining the personalized vehicle recommendation for the user is further based on historical route traversal data associated with the one or more user profiles.

In a further example embodiment, an apparatus is provided that includes at least one processor and at least one memory storing computer program code with the at least one memory and the computer program code configured to, with the processor, cause the apparatus to at least receive a route request comprising an origin location and a destination location, the route request indicative of a route to be traversed by a user in an autonomous vehicle. The at least one memory and the computer program code are also configured to, with the processor, cause the apparatus to determine, based at least on the route request, a plurality of candidate routes. The at least one memory and the computer program code are also configured to, with the processor, cause the apparatus to, based at least on the route request, determine a personalized vehicle recommendation of the autonomous vehicle for the user based upon an autonomous transition tolerance to changes in autonomy level of a vehicle during traversal of a route. The at least one memory and the computer program code are also configured to, with the processor, cause the apparatus to, based on the personalized vehicle recommendation, determine a route recommendation comprising at least one of the plurality of candidate routes. The at least one memory and the computer program code are also configured to, with the processor, cause the apparatus to cause transmission of at least one of the personalized vehicle recommendation or the route recommendation to a user device associated with the user.

In some embodiments of the apparatus, the at least one memory and the computer program code configured to, with the processor, cause the apparatus to determine a personalized vehicle recommendation for the user are also configured to provide data associated with the route request to a machine learning model, the machine learning model trained in accordance with the historical data associated with the user, and predict, utilizing the machine learning model and the personalized vehicle recommendation determined by the machine learning model, one or more vehicles the user would select to traverse the route.

In some embodiments of the apparatus, the personalized vehicle recommendation is further based on historical data comprising user profile data and historical route traversal data from one or more prior instances in which the one or more routes were traversed in an autonomous vehicle. In some embodiments of the apparatus, the historical route traversal data comprises, for a respective route of the one or more routes, one or more of: a route transition score, a total number of autonomous transition regions of the respective route, an average wait time, a maximum wait time, an average number of vehicles within one or more autonomous transition regions of the respective route, a maximum number of vehicles within one or more autonomous transition regions of the respective route, a maximum autonomous transition index value, an autonomous vehicle transition capability, a monetary cost of one or more respective autonomous vehicles to navigate the respective route, or a number of autonomous vehicles selected for the respective route.

The at least one memory and the computer program code of an example embodiment are also configured to, with the processor, cause the apparatus to perform a normalization of at least a portion of the historical route traversal data prior to the determination of the personalized vehicle recommendation for the user. The at least one memory and the computer program code of an example embodiment are also configured to, with the processor, cause the apparatus to determine a minimum amount of historical route traversal data to be used in the determination of personalized vehicle recommendation for the user. The at least one memory and the computer program code of an example embodiment are also configured to, with the processor, cause the apparatus to, in accordance with a determination that the historical data of the user fails to satisfy a predefined threshold, determine one or more user profiles of one or more other users based upon a relationship between user profile data of the user and user profile data of the one or more other users, wherein determining the personalized vehicle recommendation for the user is further based on historical route traversal data associated with the one or more user profiles.

In a further example embodiment, a computer program product is provided that includes a non-transitory computer readable medium having program code portions stored thereon with the program code portions being configured, upon execution, to receive a route request comprising an origin location and a destination location, the route request indicative of a route to be traversed by a user in an autonomous vehicle. The program code portions are also configured to determine, based at least on the route request, a plurality of candidate routes. The program code portions are also configured to, based at least on the route request, determine a personalized vehicle recommendation of the autonomous vehicle for the user based upon an autonomous transition tolerance to changes in autonomy level of a vehicle during traversal of a route. The program code portions are also configured to, based on the personalized vehicle recommendation, determine a route recommendation comprising at least one of the plurality of candidate routes. The program code portions are also configured to cause transmission of at least one of the personalized vehicle recommendation or the route recommendation to a user device associated with the user.

In some embodiments of the computer program product, the program code portions configured to determine a personalized vehicle recommendation for the user are also configured to provide data associated with the route request to a machine learning model, the machine learning model trained in accordance with the historical data associated with the user, and predict, utilizing the machine learning model and the personalized vehicle recommendation determined by the machine learning model, one or more vehicles the user would select to traverse the route.

In some embodiments of the computer program product, the personalized vehicle recommendation is further based on historical data comprising user profile data and historical route traversal data from one or more prior instances in which the one or more routes were traversed in an autonomous vehicle. In some embodiments of the computer program product, the historical route traversal data comprises, for a respective route of the one or more routes, one or more of: a route transition score, a total number of autonomous transition regions of the respective route, an average wait time, a maximum wait time, an average number of vehicles within one or more autonomous transition regions of the respective route, a maximum number of vehicles within one or more autonomous transition regions of the respective route, a maximum autonomous transition index value, an autonomous vehicle transition capability, a monetary cost of one or more respective autonomous vehicles to navigate the respective route, or a number of autonomous vehicles selected for the respective route.

The program code portions of an example embodiment are also configured to perform a normalization of at least a portion of the historical route traversal data prior to the determination of the personalized vehicle recommendation for the user. The program code portions of an example embodiment are also configured to determine a minimum amount of historical route traversal data to be used in the determination of personalized vehicle recommendation for the user. The program code portions of an example embodiment are also configured to, in accordance with a determination that the historical data of the user fails to satisfy a predefined threshold, determine one or more user profiles of one or more other users based upon a relationship between user profile data of the user and user profile data of the one or more other users, wherein determining the personalized vehicle recommendation for the user is further based on historical route traversal data associated with the one or more user profiles.

In a further example embodiment, an apparatus is provided, the apparatus including at least one processor and at least one memory storing computer program code, with the at least one memory and the computer program code configured to, with the processor, cause the apparatus to at least provide a training dataset comprising a plurality of historical data associated with a user to a machine learning model, the historical data relating to prior vehicle selections including historical data relating to an autonomous transition tolerance to changes in autonomy level of a vehicle during traversal of a route. The at least one memory and the computer program code are also configured to, with the processor, cause the apparatus to train the machine learning model utilizing the training dataset such that the machine learning model, as trained, is configured to determine a personalized vehicle recommendation of an autonomous vehicle for the user.

The at least one memory and the computer program code of an example embodiment configured to, with the processor, cause the apparatus to train the machine learning model are also configured to, with the processor, cause the apparatus to train the machine learning model to predict, utilizing the personalized vehicle recommendation, one or more vehicles the user would select to traverse a route.

In some embodiments of the apparatus, the historical data comprises user profile data and historical route traversal data from one or more prior instances in which the one or more routes were traversed in an autonomous vehicle.

In some embodiments of the apparatus, the historical route traversal data comprises, for a respective route of the one or more routes, one or more of a route transition score, a total number of autonomous transition regions of the respective route, an average wait time, a maximum wait time, an average number of vehicles within one or more autonomous transition regions of the respective route, a maximum number of vehicles within one or more autonomous regions of the respective route, a maximum autonomous transition index value, an autonomous vehicle transition capability, a monetary cost of one or more respective autonomous vehicles to navigate the respective route, or a number of autonomous vehicles selected for the respective route.

The at least one memory and the computer program code of an example embodiment configured to, with the processor, cause the apparatus to train the machine learning model are also configured to, with the processor, cause the apparatus to train the machine learning model utilizing historical data that relates to prior vehicle selections by other users including historical data relating to the autonomous transition tolerance of the other users to changes in autonomy level of a vehicle during traversal of a route.

The at least one memory and the computer program code of an example embodiment configured to, with the processor, cause the apparatus to train the machine learning model are also configured to, with the processor, cause the apparatus to train the machine learning model utilizing historical data that relates to prior vehicle selections by one or more other users including historical data relating to the autonomous transition tolerance of the one or more other users to changes in autonomy level of a vehicle during traversal of a route, the one or more other users being identified based upon a relationship between user profile data of the user and user profile data of the one or more other users.

In a further example embodiment, a computer program product is provided that includes a non-transitory computer readable medium having program code portions stored thereon with the program code portions being configured, upon execution, to provide a training dataset comprising a plurality of historical data associated with a user to a machine learning model, the historical data relating to prior vehicle selections including historical data relating to an autonomous transition tolerance to changes in autonomy level of a vehicle during traversal of a route. The program code portions are also configured to train the machine learning model utilizing the training dataset such that the machine learning model, as trained, is configured to determine a personalized vehicle recommendation of an autonomous vehicle for the user.

The program code portions of an example embodiment configured to, with the processor, cause the apparatus to train the machine learning model are also configured to train the machine learning model to predict, utilizing the personalized vehicle recommendation, one or more vehicles the user would select to traverse a route.

In some embodiments of the computer program product, the historical data comprises user profile data and historical route traversal data from one or more prior instances in which the one or more routes were traversed in an autonomous vehicle.

In some embodiments of the computer program product, the historical route traversal data comprises, for a respective route of the one or more routes, one or more of a route transition score, a total number of autonomous transition regions of the respective route, an average wait time, a maximum wait time, an average number of vehicles within one or more autonomous transition regions of the respective route, a maximum number of vehicles within one or more autonomous regions of the respective route, a maximum autonomous transition index value, an autonomous vehicle transition capability, a monetary cost of one or more respective autonomous vehicles to navigate the respective route, or a number of autonomous vehicles selected for the respective route.

The program code portions of an example embodiment configured to, with the processor, cause the apparatus to train the machine learning model are also configured to train the machine learning model utilizing historical data that relates to prior vehicle selections by other users including historical data relating to the autonomous transition tolerance of the other users to changes in autonomy level of a vehicle during traversal of a route.

The program code portions of an example embodiment configured to, with the processor, cause the apparatus to train the machine learning model are also configured to train the machine learning model utilizing historical data that relates to prior vehicle selections by one or more other users including historical data relating to the autonomous transition tolerance of the one or more other users to changes in autonomy level of a vehicle during traversal of a route, the one or more other users being identified based upon a relationship between user profile data of the user and user profile data of the one or more other users.

In a further example embodiment, an apparatus is provided that includes means for providing a training dataset comprising a plurality of historical data associated with a user to a machine learning model, the historical data relating to prior vehicle selections including historical data relating to an autonomous transition tolerance to changes in autonomy level of a vehicle during traversal of a route. The apparatus also includes means for training the machine learning model utilizing the training dataset such that the machine learning model, as trained, is configured to determine a personalized vehicle recommendation of an autonomous vehicle for the user.

The apparatus of an example embodiment including means for training the machine learning model also includes means for training the machine learning model to predict, utilizing the personalized vehicle recommendation, one or more vehicles the user would select to traverse a route.

In some embodiments of the apparatus, the historical data comprises user profile data and historical route traversal data from one or more prior instances in which the one or more routes were traversed in an autonomous vehicle.

In some embodiments of the apparatus, the historical route traversal data comprises, for a respective route of the one or more routes, one or more of a route transition score, a total number of autonomous transition regions of the respective route, an average wait time, a maximum wait time, an average number of vehicles within one or more autonomous transition regions of the respective route, a maximum number of vehicles within one or more autonomous regions of the respective route, a maximum autonomous transition index value, an autonomous vehicle transition capability, a monetary cost of one or more respective autonomous vehicles to navigate the respective route, or a number of autonomous vehicles selected for the respective route.

The apparatus of an example embodiment including means for training the machine learning model also includes means for training the machine learning model utilizing historical data that relates to prior vehicle selections by other users including historical data relating to the autonomous transition tolerance of the other users to changes in autonomy level of a vehicle during traversal of a route.

The apparatus of an example embodiment including means for training the machine learning model also includes means for training the machine learning model utilizing historical data that relates to prior vehicle selections by one or more other users including historical data relating to the autonomous transition tolerance of the one or more other users to changes in autonomy level of a vehicle during traversal of a route, the one or more other users being identified based upon a relationship between user profile data of the user and user profile data of the one or more other users.

In a further example embodiment, a method is provided that includes providing a training dataset comprising a plurality of historical data associated with a user to a machine learning model, the historical data relating to prior vehicle selections including historical data relating to an autonomous transition tolerance to changes in autonomy level of a vehicle during traversal of a route. The method also includes training the machine learning model utilizing the training dataset such that the machine learning model, as trained, is configured to determine a personalized vehicle recommendation of an autonomous vehicle for the user.

In some embodiments of the method, training the machine learning model also includes training the machine learning model to predict, utilizing the personalized vehicle recommendation, one or more vehicles the user would select to traverse a route.

In some embodiments of the method, the historical data comprises user profile data and historical route traversal data from one or more prior instances in which the one or more routes were traversed in an autonomous vehicle.

In some embodiments of the method, the historical route traversal data comprises, for a respective route of the one or more routes, one or more of a route transition score, a total number of autonomous transition regions of the respective route, an average wait time, a maximum wait time, an average number of vehicles within one or more autonomous transition regions of the respective route, a maximum number of vehicles within one or more autonomous regions of the respective route, a maximum autonomous transition index value, an autonomous vehicle transition capability, a monetary cost of one or more respective autonomous vehicles to navigate the respective route, or a number of autonomous vehicles selected for the respective route.

In some embodiments of the method, training the machine learning model also includes training the machine learning model utilizing historical data that relates to prior vehicle selections by other users including historical data relating to the autonomous transition tolerance of the other users to changes in autonomy level of a vehicle during traversal of a route.

In some embodiments of the method, training the machine learning model also includes training the machine learning model utilizing historical data that relates to prior vehicle selections by one or more other users including historical data relating to the autonomous transition tolerance of the one or more other users to changes in autonomy level of a vehicle during traversal of a route, the one or more other users being identified based upon a relationship between user profile data of the user and user profile data of the one or more other users.

The following numbered paragraphs are also disclosed:
1. An apparatus comprising at least one processor and at least one memory storing computer program code, the at least one memory and the computer program code configured to, with the processor, cause the apparatus to at least:
   receive a route request comprising an origin location and a destination location, the route request indicative of a route to be traversed by a user in an autonomous vehicle;
   based at least on the route request, determine a personalized vehicle recommendation of the autonomous vehicle for the user based upon historical data associated with the user regarding prior vehicle selections including historical data relating to an autonomous transition tolerance to changes in autonomy level of a vehicle during traversal of a route; and
   cause transmission of the personalized vehicle recommendation to a user device associated with the user.
2. The apparatus according to paragraph 1, wherein the at least one memory and the computer program code configured to determine a personalized vehicle recommendation for the user are further configured to, with the processor, cause the apparatus to:
   provide data associated with the route request to a machine learning model, the machine learning model trained in accordance with the historical data associated with the user; and
   predict, utilizing the machine learning model and the personalized vehicle recommendation determined by the machine learning model, one or more vehicles the user would select to traverse the route.
3. The apparatus according to paragraph 2, wherein the historical data comprises user profile data and historical route traversal data from one or more prior instances in which the one or more routes were traversed in an autonomous vehicle.
4. The apparatus according to paragraph 3, wherein the historical route traversal data comprises, for a respective route of the one or more routes, one or more of: a route transition score, a total number of autonomous transition regions of the respective route, an average wait time, a maximum wait time, an average number of vehicles within one or more autonomous transition regions of the respective route, a maximum number of vehicles within one or more autonomous transition regions of the respective route, a maximum autonomous transition index value, an autonomous vehicle transition capability, a monetary cost of one or more respective autonomous vehicles to navigate the respective route, or a number of autonomous vehicles selected for the respective route.
5. The apparatus according to paragraph 3, wherein the at least one memory and the computer program code are further configured to, with the processor, cause the apparatus to:
   perform a normalization of at least a portion of the historical route traversal data prior to the determination of the personalized vehicle recommendation for the user.
6. The apparatus according to paragraph 3, wherein the at least one memory and the computer program code are further configured to, with the processor, cause the apparatus to:
   determine a minimum amount of historical route traversal data to be used in the determination of personalized vehicle recommendation for the user.
7. The apparatus according to paragraph 3, wherein the at least one memory and the computer program code are further configured to, with the processor, cause the apparatus to:
   in accordance with a determination that the historical data of the user fails to satisfy a predefined threshold:
   determine one or more user profiles of one or more other users based upon a relationship between user profile data of the user and user profile data of the one or more other users,
   wherein determining the personalized vehicle recommendation for the user is further based on historical data associated with the one or more user profiles.
8. A method comprising:
   receiving a route request comprising an origin location and a destination location, the route request indicative of a route to be traversed by a user in an autonomous vehicle;
   determining, based at least on the route request, a plurality of candidate routes;
   based at least on the route request, determining a personalized vehicle recommendation of the autonomous vehicle for the user based upon an autonomous transition tolerance to changes in autonomy level of a vehicle during traversal of a route;
   based on the personalized vehicle recommendation, determining a route recommendation comprising at least one of the plurality of candidate routes; and
   causing transmission of at least one of the personalized vehicle recommendation or the route recommendation to a user device associated with the user.
9. The method according to paragraph 8, wherein determining a personalized vehicle recommendation for the user further comprises:
   providing data associated with the route request to a machine learning model, the machine learning model trained in accordance with the historical data associated with the user; and
   predicting, utilizing the machine learning model and the personalized vehicle recommendation determined by the machine learning model, one or more vehicles the user would select to traverse the route.
10. The method according to paragraph 9, wherein the personalized vehicle recommendation is further based on historical data comprising user profile data and historical route traversal data from one or more prior instances in which the one or more routes were traversed in an autonomous vehicle.
11. The method according to paragraph 10, wherein the historical route traversal data comprises, for a respective route of the one or more routes, one or more of: a route transition score, a total number of autonomous transition regions of the respective route, an average wait time, a maximum wait time, an average number of vehicles within one or more autonomous transition regions of the respective route, a maximum number of vehicles within one or more autonomous transition regions of the respective route, a maximum autonomous transition index value, an autonomous vehicle transition capability, a monetary cost of one or more respective autonomous vehicles to navigate the respective route, or a number of autonomous vehicles selected for the respective route.
12. The method according to paragraph 10, further comprising:
   performing a normalization of at least a portion of the historical route traversal data prior to the determination of the personalized vehicle recommendation for the user.
13. The method according to paragraph 10, further comprising:
   determining a minimum amount of historical route traversal data to be used in the determination of personalized vehicle recommendation for the user.
14. The method according to paragraph 10, further comprising:
   in accordance with a determination that the historical data of the user fails to satisfy a predefined threshold:
   determining one or more user profiles of one or more other users based upon a relationship between user profile data of the user and user profile data of the one or more other users,
   wherein determining the personalized vehicle recommendation for the user is further based on historical route traversal data associated with the one or more user profiles.
15. An apparatus comprising at least one processor and at least one memory storing computer program code, the at least one memory and the computer program code configured to, with the processor, cause the apparatus to at least:
   provide a training dataset comprising a plurality of historical data associated with a user to a machine learning model, wherein the historical data relates to prior vehicle selections including historical data relating to an autonomous transition tolerance to changes in autonomy level of a vehicle during traversal of a route; and
   train the machine learning model utilizing the training dataset such that the machine learning model, as trained, is configured to determine a personalized vehicle recommendation of an autonomous vehicle for the user.
16. The apparatus according to paragraph 16, wherein the at least one memory and the computer program code configured to train the machine learning model are further configured to, with the processor, cause the apparatus to:
   train the machine learning model to predict, utilizing the personalized vehicle recommendation, one or more vehicles the user would select to traverse a route.
17. The apparatus according to paragraph 15, wherein the historical data comprises user profile data and historical route traversal data from one or more prior instances in which the one or more routes were traversed in an autonomous vehicle.
18. The apparatus according to paragraph 17, wherein the historical route traversal data comprises, for a respective route of the one or more routes, one or more of: a route transition score, a total number of autonomous transition regions of the respective route, an average wait time, a maximum wait time, an average number of vehicles within one or more autonomous transition regions of the respective route, a maximum number of vehicles within one or more autonomous regions of the respective route, a maximum autonomous transition index value, an autonomous vehicle transition capability, a monetary cost of one or more respective autonomous vehicles to navigate the respective route, or a number of autonomous vehicles selected for the respective route.
19. The apparatus according to paragraph 17, wherein the at least one memory and the computer program code configured to train the machine learning model are further configured to, with the processor, cause the apparatus to:
   train the machine learning model utilizing historical data that relates to prior vehicle selections by other users including historical data relating to the autonomous transition tolerance of the other users to changes in autonomy level of a vehicle during traversal of a route.
20. The apparatus according to paragraph 17, wherein the at least one memory and the computer program code configured to train the machine learning model are further configured to, with the processor, cause the apparatus to:
   train the machine learning model utilizing historical data that relates to prior vehicle selections by one or more other users including historical data relating to the autonomous transition tolerance of the one or more other users to changes in autonomy level of a vehicle during traversal of a route,
   wherein the one or more other users are identified based upon a relationship between user profile data of the user and user profile data of the one or more other users.

### BRIEF DESCRIPTION OF THE DRAWINGS

Having thus described certain embodiments of the invention in general terms, reference will now be made to the accompanying drawings, which are not necessarily drawn to scale, and wherein:
Figure 1 is a block diagram of an apparatus that may be specifically configured in accordance with an example embodiment;
Figure 2 is a flowchart illustrating the operations performed, such as by the apparatus of Figure 1, in order to train a machine learning model to predict one or more vehicles that a user would select to traverse a route in accordance with an example embodiment;
Figure 3 is a flowchart illustrating the operations performed, such as by the apparatus of Figure 1, in order to determine a personalized vehicle recommendation in accordance with an example embodiment;
Figure 4 is a flowchart illustrating the operations performed, such as by the apparatus of Figure 1, in order to determine a route recommendation in accordance with an example embodiment; and
Figure 5 is a flowchart illustrating the operations performed, such as by the apparatus of Figure 1, in order to determine a personalized vehicle recommendation of one or more autonomous vehicles for the user based at least upon historical route traversal data associated with one or more user profiles of other users in accordance with an example embodiment.

### DETAILED DESCRIPTION

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present invention.

As described above, vehicles having autonomous functionalities (e.g., parking assist, lane change assist, lane keeping assist and/or the like) as well as fully autonomous vehicles (e.g., self-driving vehicles) have and will continue to improve conditions on roadways by reducing hazards such as distracted and/or impaired driving and other human errors. Such vehicles may be defined by a particular level of autonomy at which they operate. For example, a vehicle operating at "level 0" autonomy may issue warnings to a driver or may momentarily intervene but provides no sustained autonomous control. A vehicle operating "level 1" autonomy may provide features such that the driver and the automated system share control of the vehicle (e.g., cruise control, parking assist, lane keeping assist, etc.).

A vehicle operating at "level 2" autonomy may comprise an automated system which takes full control of the vehicle, including accelerating, braking, and steering. However, the driver must monitor the automated driving and be prepared to intervene immediately at a time when the automated system fails to respond properly. A vehicle operating at "level 3" autonomy may allow the occupant to turn their attention away from driving tasks. The "level 3" vehicle will handle situations that call for an immediate response, such as emergency braking. However, the driver must still be prepared to intervene within some limited time when called upon by the vehicle to do so.

A vehicle operating at "level 4" autonomy may require no driver attention for safety. For example, the occupant of the vehicle may sleep and/or leave the driver's seat during a commute. Further, a vehicle operating at "level 5" autonomy may require no human intervention at all. For example, the vehicle may, in some instances, be empty of occupants and be equipped to self-navigate. Examples may include a robotic taxi service and/or delivery service.

Autonomous vehicles may further improve existing business models, such as ride share or taxi services. In this regard, autonomous vehicles may be utilized for ride share services, reducing the need for labor costs of human drivers and improving user experience of the ride share service. Further, autonomous vehicles may allow for more consistency and predictability so as to potentially reduce accidents and may be operated in a more efficient and cost-effective manner.

However, within certain regions along a route, a vehicle may require disengagement from autonomous functionality (e.g., transition to a lower level of autonomy) and a passenger within the vehicle to assume manual control or more manual control of the vehicle, at least until the region is traversed. Likewise, within certain other regions, the vehicle may resume autonomous functionality, and/or transition to a different, higher level of autonomy (e.g., from level 3 to level 4). In some instances, the passenger may be required to direct the vehicle to resume autonomous control and/or change autonomy levels. In other instances, resumption of autonomous control and/or autonomous level transitions may be performed automatically by the vehicle.

As described herein, an autonomous level transition more generally includes any change in autonomy level. In this regard, an autonomous level transition is a change in the level of autonomy which in some embodiments results in a complete disconnection from autonomous functionality (e.g., to a manually-driven mode), but in other embodiments maintains some degree of autonomy with the level of autonomy changing (e.g., changing to a lower level of autonomy, referred to herein as a disengagement). Similarly, an autonomous level transition may be a change from a particular level of autonomy to a higher level of autonomy (e.g., from level 2 to level 4) or, in some embodiments a connection to autonomous functionality from a disengaged mode (e.g., a manually-driven mode), all referred to herein as an engagement.

Some examples of a region that requires a disengagement (herein referred to as a disengagement region) may include a region undergoing road work (e.g., under construction, having one or more lane closures, and/or the like), a high pedestrian traffic area (e.g., bus stops, school zone crossings, and/or the like), a region experiencing inclement conditions (e.g., black ice, etc.), a region having roadways with high curvature and/or slope, and/or a region that experiences a poor cellular signal, thereby limiting communication with the vehicle.

Some examples of a region in which a vehicle may perform an engagement (herein referred to as an engagement region) may include a region such as a highway that includes straight paths and/or wide lanes, sparsely populated regions (e.g., country roads), and/or the like.

Although one or more autonomous vehicles will disengage upon entering a particular disengagement region, not all autonomous vehicles need disengage upon encountering the disengagement region as some autonomous vehicles are capable of maintaining autonomy under certain conditions, such as when experiencing inclement conditions, while other autonomous vehicles are not so capable. Similarly, although one or more autonomous vehicles will engage (e.g., transition to a higher level of autonomy) upon entering or while within an engagement region, not all autonomous vehicles are capable of such higher levels of autonomy. For example, for some vehicles, the highest level of autonomy possible may be level 1 (e.g., vehicles having cruise control, parking assist, and the like, but no sustained self-driving capabilities). In this regard, such vehicles are not equipped to transition to a higher level of autonomy when in an engagement region allowing for, for example, level 3 autonomy.

A method, apparatus and computer program product are provided in accordance with an example embodiment in order to facilitate autonomous vehicle selection by generating personalized recommendations of autonomous vehicles that satisfy a personalized autonomous transition tolerance. In this regard, the personalized recommendations provide an indication of a vehicle that provides a desirable level of autonomy for a user.

The apparatus that is configured to determine personalized vehicle recommendations may be any of a wide variety of computing devices. For example, the apparatus may be embodied by a server, a computer workstation, a distributed network of computing devices, a personal computer, a navigation or mapping system, an advance driver-assistance system (ADAS) or any other type of computing device including mobile computing devices, such as a mobile telephone, personal computer, tablet computer, personal navigation device or the like.

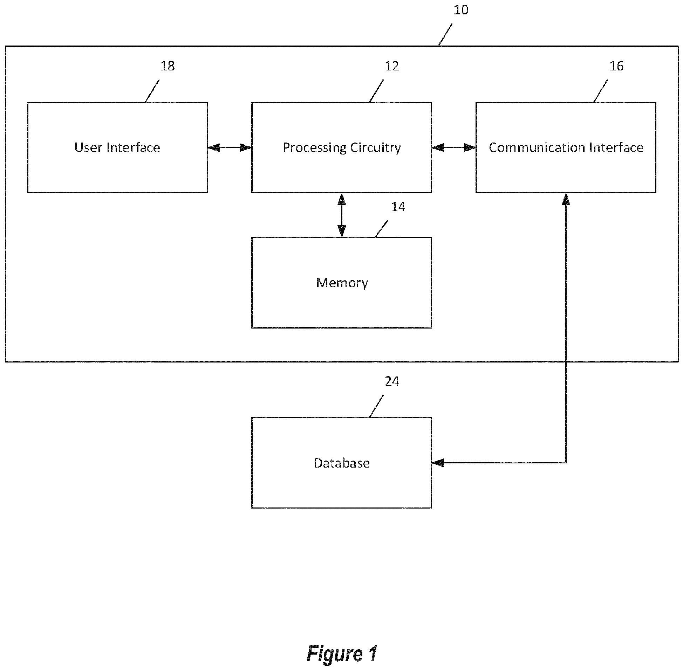

Regardless of the manner in which the apparatus is embodied, however, the apparatus 10 includes, is associated with, or is in communication with processing circuitry 12, memory 14, a communication interface 16 and optionally a user interface 18 as shown in Figure 1. In some embodiments, the processing circuitry (and/or co-processors or any other processors assisting or otherwise associated with the processing circuitry) can be in communication with the memory via a bus for passing information among components of the apparatus. The memory can be non-transitory and can include, for example, one or more volatile and/or non-volatile memories. In other words, for example, the memory may be an electronic storage device (for example, a computer readable storage medium) comprising gates configured to store data (for example, bits) that can be retrievable by a machine (for example, a computing device like the processing circuitry). The memory can be configured to store information, data, content, applications, instructions, or the like for enabling the apparatus to carry out various functions in accordance with an example embodiment of the present disclosure. For example, the memory can be configured to buffer input data for processing by the processing circuitry. Additionally or alternatively, the memory can be configured to store instructions for execution by the processing circuitry.

The processing circuitry 12 can be embodied in a number of different ways. For example, the processing circuitry may be embodied as one or more of various hardware processing means such as a processor, a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processing circuitry can include one or more processing cores configured to perform independently. A multi-core processor can enable multiprocessing within a single physical package. Additionally or alternatively, the processing circuitry can include one or more processors configured in tandem via the bus to enable independent execution of instructions, pipelining and/or multithreading.

In an example embodiment, the processing circuitry 12 can be configured to execute instructions stored in the memory 14 or otherwise accessible to the processing circuitry. Alternatively or additionally, the processing circuitry can be configured to execute hard coded functionality. As such, whether configured by hardware or software methods, or by a combination thereof, the processing circuitry can represent an entity (for example, physically embodied in circuitry) capable of performing operations according to an embodiment of the present disclosure while configured accordingly. Thus, for example, when the processing circuitry is embodied as an ASIC, FPGA or the like, the processing circuitry can be specifically configured hardware for conducting the operations described herein. Alternatively, as another example, when the processing circuitry is embodied as an executor of software instructions, the instructions can specifically configure the processing circuitry to perform the algorithms and/or operations described herein when the instructions are executed. However, in some cases, the processing circuitry can be a processor of a specific device (for example, a computing device) configured to employ an embodiment of the present disclosure by further configuration of the processor by instructions for performing the algorithms and/or operations described herein. The processing circuitry can include, among other things, a clock, an arithmetic logic unit (ALU) and/or one or more logic gates configured to support operation of the processing circuitry.

The apparatus 10 of an example embodiment can also include the communication interface 16 that can be any means such as a device or circuitry embodied in either hardware or a combination of hardware and software that is configured to receive and/or transmit data from/to other electronic devices in communication with the apparatus, such as a database 24 which, in one embodiment, comprises a map database that stores data (e.g., map data, route data, etc.) generated and/or employed by the processing circuitry 12. Additionally or alternatively, the communication interface can be configured to communicate in accordance with various wireless protocols including Global System for Mobile Communications (GSM), such as but not limited to Long Term Evolution (LTE). In this regard, the communication interface can include, for example, an antenna (or multiple antennas) and supporting hardware and/or software for enabling communications with a wireless communication network. In this regard, the communication interface can include, for example, an antenna (or multiple antennas) and supporting hardware and/or software for enabling communications with a wireless communication network. Additionally or alternatively, the communication interface can include the circuitry for interacting with the antenna(s) to cause transmission of signals via the antenna(s) or to handle receipt of signals received via the antenna(s). In some environments, the communication interface can alternatively or also support wired communication and/or may alternatively support vehicle to vehicle or vehicle to infrastructure wireless links.

The map database of database 24 may include node data, road segment data or link data, point of interest (POI) data, traffic data or the like. The map database may also include cartographic data, routing data, and/or maneuvering data. According to some example embodiments, the road segment data records may be links or segments representing roads, streets, or paths, as may be used in calculating a route or recorded route information for determination of one or more personalized routes. The node data may be end points corresponding to the respective links or segments of road segment data. The road link data and the node data may represent a road network, such as used by vehicles, cars, trucks, buses, motorcycles, and/or other entities. Optionally, the map database may contain path segment and node data records or other data that may represent pedestrian paths or areas in addition to or instead of the vehicle road record data, for example. The road/link segments and nodes can be associated with attributes, such as geographic coordinates, street names, address ranges, speed limits, turn restrictions at intersections, and other navigation related attributes, as well as POIs, such as fueling stations, hotels, restaurants, museums, stadiums, offices, auto repair shops, buildings, stores, parks, etc. The map database can include data about the POIs and their respective locations in the POI records. The map database may include data about places, such as cities, towns, or other communities, and other geographic features such as bodies of water, mountain ranges, etc. Such place or feature data can be part of the POI data or can be associated with POIs or POI data records (such as a data point used for displaying or representing a position of a city). In addition, the map database can include event data (e.g., traffic incidents, construction activities, scheduled events, unscheduled events, etc.) associated with the POI data records or other records of the map database. As noted above, the map database accessed by an apparatus 10 of an example embodiment includes information regarding one or more map objects including information regarding the type of map object and the location of the map obj ect.

The map database of database 24 may be maintained by a content provider e.g., the map data service provider and may be accessed, for example, by the content or service provider processing server. By way of example, the map data service provider can collect geographic data and dynamic data to generate and enhance the map database and dynamic data such as traffic-related data contained therein. There can be different ways used by the map developer to collect data. These ways can include obtaining data from other sources, such as municipalities or respective geographic authorities, such as via global information system databases. In addition, the map developer can employ field personnel to travel by vehicle along roads throughout the geographic region to observe features and/or record information about them, for example. Also, remote sensing, such as aerial or satellite photography and/or LiDAR, can be used to generate map geometries directly or through machine learning as described herein. However, the most ubiquitous form of data that may be available is vehicle data provided by vehicles, such as mobile device, as they travel the roads throughout a region.

The map database of database 24 may be a master map database, such as an HD map database, stored in a format that facilitates updates, maintenance, and development. For example, the master map database or data in the master map database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data may be compiled (such as into a platform specification format (PSF) format) to organize and/or configure the data for performing navigation-related functions and/or services, such as route calculation, route guidance, map display, speed calculation, distance and travel time functions, and other functions, by a navigation device, such as by a vehicle represented by mobile device, for example. The navigation-related functions can correspond to vehicle navigation, pedestrian navigation, or other types of navigation. The compilation to produce the end user databases can be performed by a party or entity separate from the map developer. For example, a customer of the map developer, such as a navigation device developer or other end user device developer, can perform compilation on a received map database in a delivery format to produce one or more compiled navigation databases.

As mentioned above, the map database of database 24 may be a master geographic database, but in alternate embodiments, a client side map database may represent a compiled navigation database that may be used in or with end user devices to provide navigation and/or map-related functions. For example, the map database may be used with the mobile device to provide an end user with navigation features. In such a case, the map database can be downloaded or stored on the end user device which can access the map database through a wireless or wired connection, such as via a processing server and/or a network, for example.

The apparatus 10 may also optionally include a user interface 18 that may, in turn, be in communication with the processing circuitry 12 to provide output to the user and, in some embodiments, to receive an indication of a user input. As such, the user interface may include a display and, in some embodiments, may also include a keyboard, a mouse, a joystick, a touch screen, touch areas, soft keys, one or more microphones, a plurality of speakers, or other input/output mechanisms. In one embodiment, the processing circuitry may comprise user interface circuitry configured to control at least some functions of one or more user interface elements such as a display and, in some embodiments, a plurality of speakers, a ringer, one or more microphones and/or the like. The processing circuitry and/or user interface circuitry embodied by the processing circuitry may be configured to control one or more functions of one or more user interface elements through computer program instructions (for example, software and/or firmware) stored on a memory accessible to the processing circuitry (for example, memory 14, and/or the like).

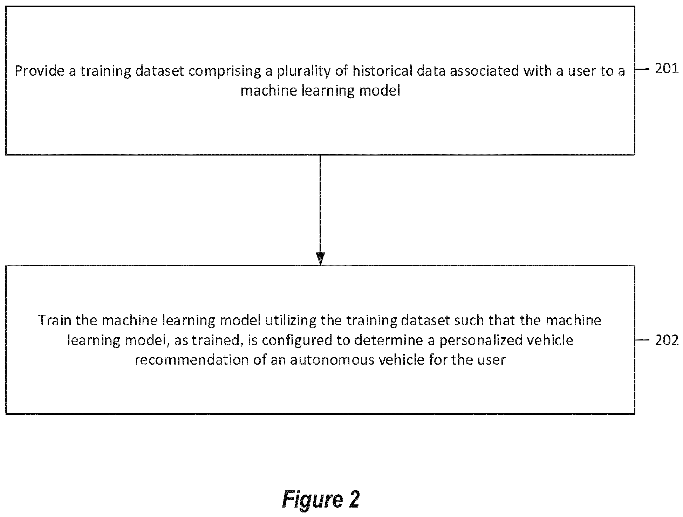

Referring now to Figure 2, the operations performed, such as by the apparatus 10 of Figure 1, in order to train a machine learning model to predict one or more autonomous vehicles that a user would select to traverse a route are depicted. As shown in block 201, the apparatus includes means, such as the processing circuitry 12, memory 14, the communication interface 16 or the like, for providing a training dataset comprising a plurality of historical data associated with a user to a machine learning model. The plurality of historical data associated with the user in the training dataset may comprise user profile data and historical route traversal data.

User profile data may be data related to the particular user. For example, user profile data may comprise demographic data (e.g., name, age, location, etc.), contact information (e.g., email addresses, home addresses, phone numbers, etc.) and/or any other type of personal information.

Historical route traversal data may be historical data related to routes taken and/or vehicles utilized by the user over time. Historical route traversal data and user profile data may be collected and stored over time by the apparatus 10 from one or more external sources, such as user devices belonging to the user (e.g., a mobile phone and/or the like) and/or autonomous vehicles driven by the user, such as the navigation systems of such autonomous vehicles. In an embodiment, the historical data may be received via the communication interface 16 and stored, for example, in database 24.

The historical route traversal data may include data related to autonomous transition regions, such as engagement regions and/or disengagement regions along routes that have been previously traversed by the user. For example, a plurality of parameters associated with engagement and/or disengagement regions may be collected and stored in association with the user. The data that is collected pertaining to the particular user's traversal and other interactions along previously traversed routes having autonomous transition regions may serve to define the user's personalized autonomous transition tolerance. The personalized autonomous transition tolerance may include data associated one or more parameters for respective routes historically traversed.

One such parameter may include the number of disengagement regions along a respective route which the user has historically selected and traversed. For example, given a route that a user selects to traverse, this number represents a count of the total number of disengagement regions along the selected route. In this regard, when selecting between different routes to traverse in order to arrive at a desired destination, the user may have a preference regarding the number of disengagement regions along a route, as the disengagement regions may be correlated with wait times, congestion, and/or require the user to manually control the vehicle.

Similarly, another parameter may include the number of engagement regions along a respective route which the user has historically selected and traversed. For example, given a route that a user selects to traverse, this number represents a count of the total number of engagement regions along the selected route. In this regard, when selecting between different candidate routes to traverse in order to arrive at a desired destination, the user may have a preference regarding the number of engagement regions along a route, as the engagement regions may be correlated with higher levels of autonomy and thus less required user interaction with the vehicle. For example, the user may desire time within the autonomous vehicle to be spent on non-driving tasks (e.g., reading, napping, working, etc.) and therefore select a route based on the route having a high number of engagement regions. The number of disengagement regions and the number of engagement regions may be collectively referenced as the number of autonomous transition regions.

Another parameter that may further define a personalized autonomous transition tolerance may include a route transition score for a respective route which the user has historically selected and traversed. A route transition score may be a value determined based on information regarding one or more autonomous transition regions of the respective route. For example, the route transition score may be based on one or more engagement regions, one or more disengagement regions, or a combination of both engagement regions and disengagement regions of the respective route. In some embodiments, a route transition score may be a value on a scale (e.g., a value between 0 and 1), with a higher value representative of a route having longer wait times, more disengagement regions, and/or the like. Likewise, a route transition score having a lower value, e.g., less than .4, may be indicative of a route comprised primarily of engagement regions. Further details regarding determination of route transition scores, as well as autonomous transition region parameters and the determination thereof as described herein are provided by U.S. Patent Application No. __/___,___ filed ____, the entire contents of which are expressly incorporated by reference herein in their entirety.

Another parameter that may further define a personalized autonomous transition tolerance may include an average wait time for a respective route which the user has historically selected and traversed. The average wait time may comprise a value representative of an average time spent disengaged while traversing through one or more disengagement regions along the respective route (e.g., operating at a lower level of autonomy within disengagement regions). Certain disengagement regions may require more time to traverse than others. For example, a disengagement region lacking cellular service to communicate with the vehicle may only last several miles and take, for example, ten minutes to traverse while disengaged. Another disengagement region comprising a construction zone and/or one or more lane closures may take thirty minutes to traverse while disengaged.

Another parameter that may further define a personalized autonomous transition tolerance may include a maximum wait time for a respective route which the user has historically selected and traversed. For example, as described above, each disengagement region along a respective route may be associated with a wait time, e.g., a time spent disengaged while traversing through the respective disengagement region. The maximum wait time may represent a maximum wait time (e.g., the longest wait time) of all wait times of disengagement regions along the respective route. Inclusion of a maximum wait time may help represent the data associated with the respective route (and personalized autonomous transition tolerance) more accurately. For example, a particular route may be associated with a low average wait time due to having a plurality of disengagement regions having wait times of, for example, less than five minutes, yet also have a disengagement region with significantly high wait time (e.g., over 30 minutes), thereby skewing the average wait time.

Another parameter that may further define a personalized autonomous transition tolerance may include an average number of disengaged vehicles within disengagement regions along a respective route which the user has historically selected and traversed. For example, each disengagement region along a respective route may have several vehicles currently disengaged within the respective disengaged region while the user traverses the respective route. This parameter may be indicative of the average number of vehicles in one or more of the disengagement regions along the respective route.

Another parameter that may further define a personalized autonomous transition tolerance may include a maximum number of vehicles within disengagement regions along a respective route which the user has historically selected and traversed. The maximum number of vehicles within disengagement regions may represent a maximum number (e.g., the highest number) of vehicles within a disengagement region of the disengagement regions of the respective route. Inclusion of a maximum number of vehicles within disengagement regions may help represent the data associated with the respective route (and personalized autonomous transition tolerance) more accurately, similar to the maximum wait time parameter described above. For example, a particular route may be associated with a low average number of disengaged vehicles due to having a plurality of disengagement regions having a low number of disengaged vehicles, yet also have a disengagement region with significantly high number of disengaged vehicles, thereby skewing the average wait time.

Another parameter that may further define a personalized autonomous transition tolerance may include a maximum autonomous transition index value for autonomous transition regions along a respective route which the user has historically selected and traversed. The maximum autonomous transition index value may, in some instances, be a maximum (e.g., highest) disengagement index value of all disengagement index values associated with the respective route. For example, a disengagement index value may be associated with a respective disengagement region and may comprise a value on a scale (e.g., a value between 0 and 1) representative of a condition of the respective disengagement region. For example, a higher current disengagement index may be indicative of a more severe condition of the disengagement region (e.g., a large amount of disengaged vehicles currently present within the disengagement region, inclement weather conditions present within the disengagement region, etc.). Conversely, a lower current disengagement index may be indicative of a less severe condition of the disengagement region (e.g., a small number of disengaged vehicles currently present within the disengagement region, short waiting times within the disengagement region, etc.). Further details regarding disengagement index values and the determination thereof are provided by U.S. Patent Application No. __/___,___ filed ____, the entire contents of which are expressly incorporated by reference herein in their entirety.

Additional parameters defining a personalized autonomous transition tolerance may include parameters associated with autonomous vehicles historically selected by the user to traverse one or more routes.

For example, a parameter that may further define a personalized autonomous transition tolerance may include an autonomous vehicle transition capability of a respective autonomous vehicle which the user has historically selected and/or utilized to traverse one or more routes. In some embodiments, an autonomous vehicle transition capability may be a categorical indication representing a capability of the autonomous vehicle to autonomously traverse a particular type of disengagement reason. For example, an autonomous vehicle transition capability may be a categorical indication of "5G Signal Lost," indicating that the particular autonomous vehicle is capable of autonomously traversing a disengagement region lacking cellular service and is not required to disengage while doing so. In some embodiments, an autonomous vehicle transition capability may be a categorical indication representing a capability of the autonomous vehicle to operate at and/or transition to a particular autonomous level (e.g., while within engagement regions). For example, an autonomous vehicle transition capability may be a categorical indication of "4," indicating that the particular autonomous vehicle is capable of operating at a maximum autonomy level of "level 4," as described above.

Another parameter further defining a personalized autonomous transition tolerance may include a cost value associated with a respective autonomous vehicle which the user has historically selected and/or utilized to traverse one or more routes. For example, a cost value may represent a monetary cost the user may have incurred for selecting the vehicle and subsequently traversing one or more routes with the vehicle. In some embodiments, the cost value may represent a flat-fee, or alternatively, the cost value may be based on a time usage of the vehicle, e.g., a cost-per-hour. In some embodiments, a cost value may be higher for certain vehicles, such as, for example, vehicles that are capable of autonomously traversing a higher number of disengagement regions and/or vehicles that are configured for a higher level of autonomy (e.g., level 4 and/or level 5 autonomy).

Another parameter further defining a personalized autonomous transition tolerance may include a value representing a number of autonomous vehicles which the user has historically selected to traverse a respective route. For example, in some instances, the user may select and utilize two or more autonomous vehicles for traversal of a route. In this regard, the user may have utilized two or more autonomous vehicles for a route for purposes of cost savings, autonomous traversal capabilities, and/or the like. For example, a second autonomous vehicle may have been utilized for a portion of a route to autonomously traverse a disengagement region which a first, less costly autonomous vehicle utilized for the remainder of the route was not able to autonomously traverse. Selection of the second autonomous vehicle to be utilized may indicate that the user prefers both minimizing costs associated with traversing routes as well as traversing routes completely autonomously.

The data that is collected pertaining to the particular user's traversal and other interactions along previously traversed routes having autonomous transition regions, including the parameters described above, defines the user's personalized autonomous transition tolerance. Such data and parameters may be recorded for a plurality of users. For example, the following tables illustrate three examples of different users and the parameters described above that define their respective associated personalized autonomous transition tolerance.

**Table A**

| **# Regions** | **Transition Score** | **Avg Wait Time** | **Max Wait Time** | **Avg # Disengaged Vehicles** | **Max# Disengaged Vehicles** | **Max Index** | **Capability** | **Cost** | **Vehicles Selected** |
|---|---|---|---|---|---|---|---|---|---|
| 3 | 0.45 | 45 mins | 40 mins | 6 cars | 20 cars | 0.8 | Road works | $25 | 1 |
| 4 | 0.25 | 35 mins | 20 mins | 2 cars | 5 cars | 0.6 | Road works | $15 | 2 |
| ... | ... | ... | ... | ... | ... | ... | ... | ... | ... |

As shown in Table A, a personalized autonomous transition tolerance for a first user (e.g., Mary) is shown as a plurality of tuples comprising the parameters described above. In this regard, each tuple represents historical information about vehicles selected and route-based autonomous transition information for a particular route that Mary has historically traversed. Tables B and C below show personalized transition tolerances for users Alice and Bob, respectively.

**Table B**

| **# Regions** | **Transition Score** | **Avg Wait Time** | **Max Wait Time** | **Avg # Disengaged Vehicles** | **Max# Disengaged Vehicles** | **Max Index** | **Capability** | **Cost** | **Vehicles Selected** |
|---|---|---|---|---|---|---|---|---|---|
| 13 | 0.45 | 15 mins | 10 mins | 7 cars | 7 cars | 0.8 | Road works | $5 | 5 |
| 5 | 0.15 | 35 mins | 15 mins | 2 cars | 5 cars | 0.5 | Pedestrian | $10 | 7 |
| ... | ... | ... | ... | ... | ... | ... | ... | ... | ... |

**Table C**

| **# Regions** | **Transition Score** | **Avg Wait Time** | **Max Wait Time** | **Avg # Disengaged Vehicles** | **Max# Disengaged Vehicles** | **Max Index** | **Capability** | **Cost** | **Vehicles Selected** |
|---|---|---|---|---|---|---|---|---|---|
| 13 | 0.45 | 10 mins | 7 mins | 7 cars | 16 cars | 0.5 | Road works | $5 | 3 |
| 12 | 0.15 | 15 mins | 27 mins | 2 cars | 9 cars | 0.4 | Loss of 5G | $20 | 3 |
| ... | ... | ... | ... | ... | ... | ... | ... | ... | ... |

In this regard, a personalized vehicle recommendation may be determined and provided, for example, based on the historical information on the user's vehicle selection and autonomous transition tolerance. For example, a training dataset comprising, along with user profile data, the plurality of historical data associated with the user (e.g., as shown in the tables above) is provided to a machine learning model.

In accordance with an example embodiment, the apparatus 10 also includes means, such as the processing circuitry 12, the memory 14 or the like, configured to train a machine learning model utilizing the training dataset. See block 202. In this regard, the machine learning model may be trained such that the machine learning model, as trained, is configured to determine a personalized vehicle recommendation of an autonomous vehicle for the user.

The apparatus 10, such as the processing circuitry 12, may train any of a variety of machine learning models to determine a personalized vehicle recommendation. Examples of machine learning models that may be trained include a decision tree model, a random forest model, a neural network, a model that employs logistic regression, or the like.

For example, the machine learning model may be constructed and trained to determine one or more correlations within the training dataset. For example, similarities between all pairs of autonomous vehicles chosen by a user may be determined. In this regard, any number of measures may be considered, such as correlations between selected autonomous vehicles, correlations between selected routes, correlations between selected routes and selected autonomous vehicles, etc. In some embodiments, one or more parameters may be normalized prior to training the machine learning model and/or prior to determining a personalized vehicle recommendation. In this regard, the apparatus 10 also includes means, such as the processing circuitry 12, the memory 14 or the like, configured to perform a normalization of at least a portion of the historical route traversal data.

In some embodiments, the apparatus 10 also includes means, such as the processing circuitry 12, the memory 14 or the like, configured to determine a minimum amount of historical route traversal data to be used in the determination of personalized vehicle recommendation for the user. For example, the apparatus 10 may utilize one or more algorithms, such as a Chi Square algorithm and/or an Information Gain algorithm, to determine a minimum set of data to be used in determining a personalized vehicle recommendation for a user, such that the resulting vehicle recommendation still provides an accurate prediction of autonomous vehicles the user would select. In this regard, reducing the number of parameters used to arrive at a minimum set of data to determine a personalized vehicle recommendation may speed up learning by the machine learning model and reduce the time it takes to determine an autonomous vehicle recommendation.

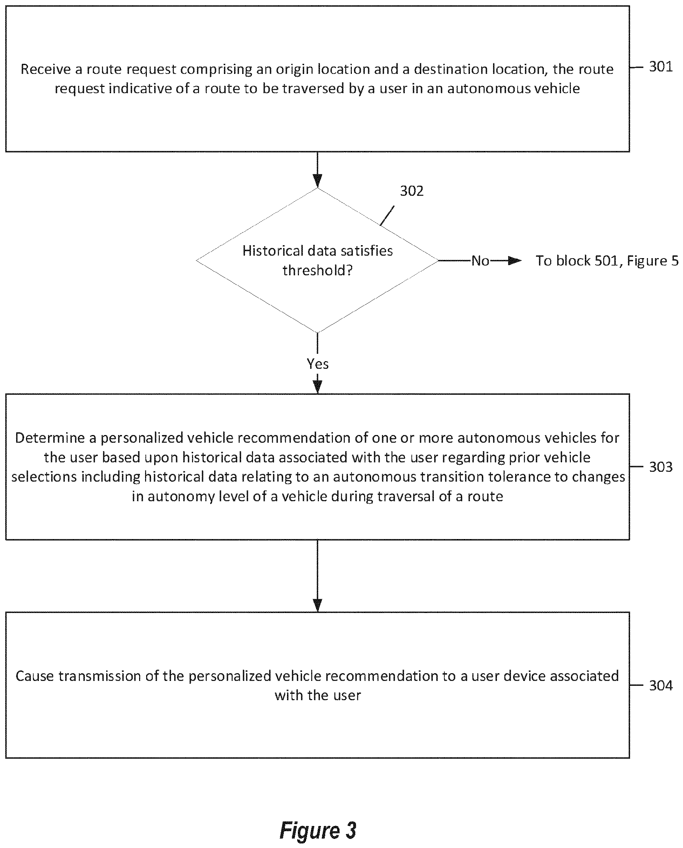

Turning to Figure 3, operations for determining a personalized vehicle recommendation utilizing a trained machine learning model are illustrated. At block 301, the apparatus 10 includes means, such as the processing circuitry 12, the memory 14, communication interface 16, and/or the like, configured to receive a route request. The route request may comprise an origin location and a destination location. The route request may also comprise data associated with the user, such as data identifying the user (e.g., a user identifier or the like). For example, the route request may be indicative of a route to be traversed by a user in an autonomous vehicle. In this regard, the route request may be received from an external source via the communication interface 16. In an embodiment, the route request may be received via the communication interface 16 from a user device, such as a mobile phone, laptop, and/or the like.

The route request may be received in response to a user desiring to embark on a particular journey to a destination and initiating the route request via a user device (e.g., a mobile phone or the like). The origin location and/or destination location may be a location (e.g., a pair of latitude and longitude coordinates) manually input by the user. In an embodiment, the origin location may represent a current location of the user and/or user device, for example, as determined by one or more Global Positioning Satellite (GPS) systems.

At block 302, the apparatus 10 includes means, such as the processing circuitry 12, the memory 14, and/or the like, configured to determine whether historical data associated with the user satisfies a predefined threshold. For example, in some instances, the user initiating the route request may be a new user and thus lack a history of data associated with prior routes taken and/or autonomous vehicles utilized. In this regard, historical data associated with the user may be compared to a predefined threshold. For example, the predefined threshold may define an amount of historical data required to generate a personalized vehicle recommendation based on historical data associated with the specific user. As one example, the predefined threshold may require that the user complete a predefined number of routes (e.g., ten routes) such that a suitable amount of historical data may be used to accurately determine a personalized vehicle recommendation. Additionally or alternatively, the predefined threshold may require that the user utilize a predefined number of autonomous vehicles (e.g., ten autonomous vehicles) such that a suitable amount of historical data may be used to accurately determine a personalized vehicle recommendation.

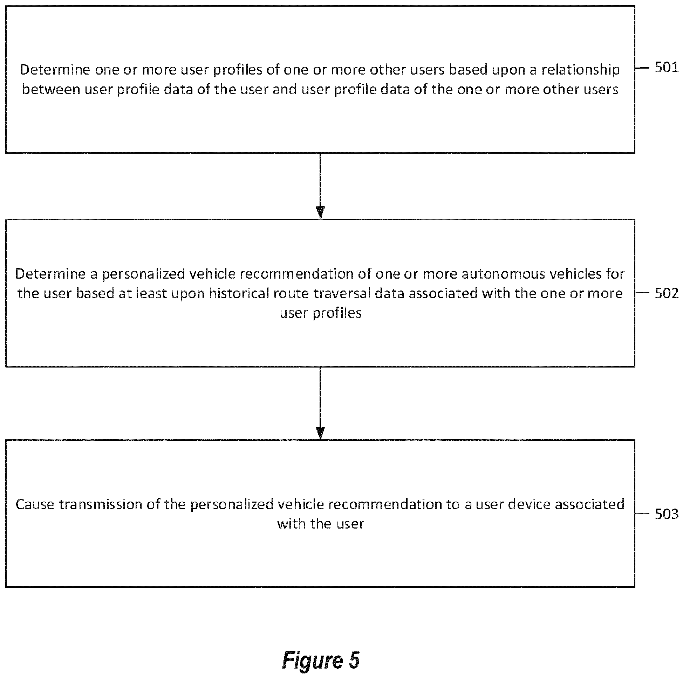

In accordance with a determination that the historical data of the user fails to satisfy a predefined threshold, operations associated with using other user profiles to determine a personalized vehicle recommendation may be carried out as shown in Figure 5, further described below. However, in accordance with a determination that the historical data of the user satisfies the predefined threshold, the method may continue to block 303, wherein the apparatus 10 includes means, such as the processing circuitry 12, the memory 14, and/or the like, configured to determine a personalized vehicle recommendation of one or more autonomous vehicles for the user. As described above, the personalized vehicle recommendation may be based on historical data associated with the user regarding prior vehicle selections including historical data relating to an autonomous transition tolerance to changes in autonomy level of a vehicle during traversal of a route.

The personalized vehicle recommendation may comprise data associated with one or more autonomous vehicles that the user would be likely to select to traverse the route associated with the route request. In this regard, the apparatus 10 includes means, such as the processing circuitry 12, the memory 14, and/or the like, configured to predict, utilizing the machine learning model and the personalized vehicle recommendation determined by the machine learning model, one or more vehicles the user would select to traverse the route.

At block 304, the apparatus 10 includes means, such as the processing circuitry 12, the memory 14, and/or the like, configured to cause transmission of the personalized vehicle recommendation to a user device associated with the user. In this regard, the personalized vehicle recommendation may be configured to be rendered via a user interface at the user device. For example, once rendered, the user is able to review the one or more autonomous vehicles of the personalized vehicle recommendation and select one or more of the autonomous vehicles to utilize for traversal of the route associated with the route request. In this regard, indications of the one or more autonomous vehicles may be presented at the user interface, for example, in the form of a listing. In some embodiments, the listing of the autonomous vehicles may be a ranked listing. As one example, the autonomous vehicles may be ranked by an attribute, such as cost, with the listing beginning with the least expensive option. Similarly, the autonomous vehicles may be ranked by historical preference of the user. For example, a particular autonomous vehicle of the one or more autonomous vehicles that the user has utilized for prior routes may be presented at the beginning or top of the listing.

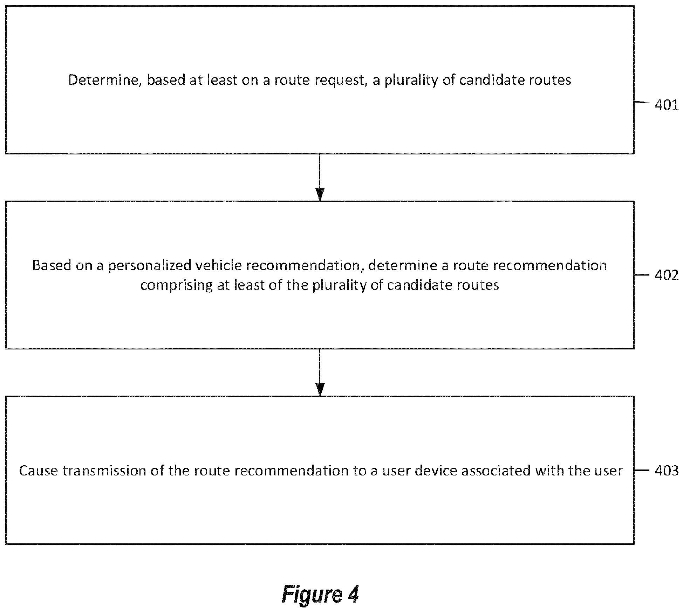

In some embodiments, in addition to a personalized vehicle recommendation, a route recommendation may also be determined. Turning to Figure 4, operations associated with determining a route recommendation are depicted.

As shown in block 401, the apparatus includes means, such as the processing circuitry 12, memory 14 or the like, for determining, based at least on the route request, one or more candidate routes. For example, after receiving a route request (e.g., as in block 301 of Figure 3) and using information from the route request, such as the origin location and destination location, the apparatus 10, such as the processing circuitry 12, may utilize the map database of database 24 described above to determine one or more candidate routes for the user to travel from the origin location to the destination location. A determined candidate route may also comprise information regarding a plurality of autonomous transition regions associated with the candidate route. The apparatus 10, such as the processing circuitry 12, may determine that a candidate route comprises one or more engagement and/or disengagement regions based on data previously collected and stored in database 24. For example, data from a plurality of vehicles previously collected over time and aggregated may be stored in database 24 and analyzed to determine one or more engagement and/or disengagement regions of respective candidate routes.

At block 402, the apparatus includes means, such as the processing circuitry 12, memory 14 or the like, for determining a route recommendation comprising at least one of the plurality of candidate routes.

In an embodiment, for a respective candidate route of the one or more candidate routes that has at least one disengagement region, the apparatus includes means, such as the processing circuitry 12, memory 14 or the like, for analyzing the respective candidate route based at least upon a plurality of autonomous transition region parameters. In this regard, the apparatus includes means, such as the processing circuitry 12, memory 14 or the like, for determining, for an autonomous transition region associated with the respective candidate route, a plurality of autonomous transition region parameters.

Utilizing the personalized vehicle recommendation and the analysis of one or more candidate routes based at least upon a plurality of autonomous transition region parameters, the apparatus 10, such as the processing circuitry, may be configured to determine a route recommendation comprising one or more recommended routes for the user to traverse using one or more recommended vehicles from the personalized vehicle recommendation.

The recommended routes may be routes that are best suited to be traversed by the one or more recommended vehicles. As one example, a recommended route may be a route comprising disengagement regions which a recommended vehicle is able to autonomously traverse based on its capabilities. Additionally or alternatively, a recommended route may be a route comprising engagement regions of which a recommended vehicle is able to fully take advantage (e.g., engagement regions allowing for level 5 autonomy and a recommended vehicle capable of operating at level 5 autonomy). In this regard, a recommended route may be associated with a recommended vehicle of the personalized vehicle recommendation, while another recommended route may be associated with another recommended vehicle of the personalized vehicle recommendation.

At block 403, the apparatus includes means, such as the processing circuitry 12, memory 14 or the like, for causing transmission of the route recommendation to a user device associated with the user. In some embodiments, the route recommendation may be caused to be transmitted along with the personalized vehicle recommendation. In this regard, the route recommendation may be configured to be rendered to a user interface at the user device. For example, once rendered, the user is able to review the one or more recommended routes of the route recommendation and select one or more recommended routes to traverse. For example, indications of the one or more recommended routes may be presented at the user interface, for example, in the form of a listing. In some embodiments, the listing of recommended routes may be presented alongside a listing of the autonomous vehicles. In some embodiments, the listing may be a ranked listing. As one example, the recommended routes and/or recommended autonomous vehicles may be ranked by an attribute, such as vehicle cost, with the listing beginning with the least expensive autonomous vehicle and associated recommended route. Similarly, the recommended routes may be ranked by historical preference of the user. For example, a particular recommended route that the user has historically traversed at least a portion of may be presented at the beginning or top of the listing.

As described above in regard to block 302 of Figure 3, in some embodiments, the apparatus 10 may be configured to determine that the historical data of the user fails to satisfy a predefined threshold, for example, in instance in which the user is a new user and/or otherwise lacks sufficient historical route traversal data. Figure 5 illustrates operations associated with using other user profiles to determine a personalized vehicle recommendation for such a user.

At block 501, the apparatus includes means, such as the processing circuitry 12, memory 14 or the like, for determining one or more user profiles of one or more other users based upon a relationship between user profile data of the user and user profile data of the one or more other users.

For example, correlations and/or similarities between user profile data of the user and user profile data of one or more other users may be determined in any of one or more predefined manners. As one example, a relationship between user profiles and the user profile of the user may be an age of the user. For example, users in a similar age group may prefer similar autonomous vehicle and/or levels of autonomy. A younger age group, e.g., eighteen to twenty-five years old, may be more comfortable with higher levels of autonomy (e.g., level 4 and/or 5) whereas an older age group, e.g., fifty years and older, may prefer lower levels of autonomy and/or to have more direct control over the autonomous vehicle. Other demographic information within user profile data may be utilized to determine one or more user profiles having a relationship. Additionally or alternatively, the route may be considered by the processing circuitry in relation to defining correlations and/or similarities. For example, a relationship may be established with other user profiles having historical route traversal data associated with at least a portion of the particular route of a route request initiated by the user. For example, route traversal data of other user profiles that have historically traversed a route from the origin location to the destination location of the route request may be utilized in determining a personalized vehicle recommendation for the user.

In this regard, the apparatus includes means, such as the processing circuitry 12, memory 14 or the like, for training the machine learning model utilizing historical data that relates to prior vehicle selections by one or more other users including historical data relating to the autonomous transition tolerance of the one or more other users to changes in autonomy level of a vehicle during traversal of a route.

At block 502, the apparatus includes means, such as the processing circuitry 12, memory 14 or the like, for determining a personalized vehicle recommendation of one or more autonomous vehicles for the user based at least upon historical data associated with the one or more user profiles.

In instances in which historical data of a user fails to meet a predefined threshold such that the user has no associated historical data or a limited amount of associated historical data, a personalized vehicle recommendation for the user may be further based on historical data (e.g., historical route traversal data) of one or more other users (e.g., user profiles).

At block 503, the apparatus includes means, such as the processing circuitry 12, memory 14 or the like, for causing transmission of the personalized vehicle recommendation to a user device associated with the user. In this regard, the personalized vehicle recommendation based on historical data associated with one or more user profiles of other users may be transmitted to a user device of the user to facilitate user selection of an autonomous vehicle, similarly as performed in block 304 of Figure 3.

Figures 2-5 illustrate flowcharts depicting a method according to an example embodiment of the present invention. It will be understood that each block of the flowcharts and combination of blocks in the flowcharts may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory device 14 of an apparatus 10 employing an embodiment of the present invention and executed by the processing circuitry 12. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Furthermore, in some embodiments, additional optional operations may be included. Modifications, additions, or amplifications to the operations above may be performed in any order and in any combination.

Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An apparatus comprising at least one processor and at least one memory storing computer program code, the at least one memory and the computer program code configured to, with the processor, cause the apparatus to at least:
receive a route request comprising an origin location and a destination location, the route request indicative of a route to be traversed by a user in an autonomous vehicle;
based at least on the route request, determine a personalized vehicle recommendation of the autonomous vehicle for the user based upon historical data associated with the user regarding prior vehicle selections including historical data relating to an autonomous transition tolerance to changes in autonomy level of a vehicle during traversal of a route; and
cause transmission of the personalized vehicle recommendation to a user device associated with the user.

2. The apparatus according to claim 1, wherein the at least one memory and the computer program code configured to determine a personalized vehicle recommendation for the user are further configured to, with the processor, cause the apparatus to:
provide data associated with the route request to a machine learning model, the machine learning model trained in accordance with the historical data associated with the user; and
predict, utilizing the machine learning model and the personalized vehicle recommendation determined by the machine learning model, one or more vehicles the user would select to traverse the route.

3. The apparatus according to claim 2, wherein the historical data comprises user profile data and historical route traversal data from one or more prior instances in which the one or more routes were traversed in an autonomous vehicle.

4. The apparatus according to claim 3, wherein the historical route traversal data comprises, for a respective route of the one or more routes, one or more of: a route transition score, a total number of autonomous transition regions of the respective route, an average wait time, a maximum wait time, an average number of vehicles within one or more autonomous transition regions of the respective route, a maximum number of vehicles within one or more autonomous transition regions of the respective route, a maximum autonomous transition index value, an autonomous vehicle transition capability, a monetary cost of one or more respective autonomous vehicles to navigate the respective route, or a number of autonomous vehicles selected for the respective route.

5. The apparatus according to claim 3, wherein the at least one memory and the computer program code are further configured to, with the processor, cause the apparatus to:
perform a normalization of at least a portion of the historical route traversal data prior to the determination of the personalized vehicle recommendation for the user.

6. The apparatus according to claim 3, wherein the at least one memory and the computer program code are further configured to, with the processor, cause the apparatus to:
determine a minimum amount of historical route traversal data to be used in the determination of personalized vehicle recommendation for the user.

7. The apparatus according to claim 3, wherein the at least one memory and the computer program code are further configured to, with the processor, cause the apparatus to:
in accordance with a determination that the historical data of the user fails to satisfy a predefined threshold:
determine one or more user profiles of one or more other users based upon a relationship between user profile data of the user and user profile data of the one or more other users,
wherein determining the personalized vehicle recommendation for the user is further based on historical data associated with the one or more user profiles.

8. A method comprising:
receiving a route request comprising an origin location and a destination location, the route request indicative of a route to be traversed by a user in an autonomous vehicle;
determining, based at least on the route request, a plurality of candidate routes;
based at least on the route request, determining a personalized vehicle recommendation of the autonomous vehicle for the user based upon an autonomous transition tolerance to changes in autonomy level of a vehicle during traversal of a route;
based on the personalized vehicle recommendation, determining a route recommendation comprising at least one of the plurality of candidate routes; and
causing transmission of at least one of the personalized vehicle recommendation or the route recommendation to a user device associated with the user.

9. The method according to claim 8, wherein determining a personalized vehicle recommendation for the user further comprises:
providing data associated with the route request to a machine learning model, the machine learning model trained in accordance with the historical data associated with the user; and
predicting, utilizing the machine learning model and the personalized vehicle recommendation determined by the machine learning model, one or more vehicles the user would select to traverse the route.

10. The method according to claim 9, wherein the personalized vehicle recommendation is further based on historical data comprising user profile data and historical route traversal data from one or more prior instances in which the one or more routes were traversed in an autonomous vehicle.

11. The method according to claim 10, wherein the historical route traversal data comprises, for a respective route of the one or more routes, one or more of: a route transition score, a total number of autonomous transition regions of the respective route, an average wait time, a maximum wait time, an average number of vehicles within one or more autonomous transition regions of the respective route, a maximum number of vehicles within one or more autonomous transition regions of the respective route, a maximum autonomous transition index value, an autonomous vehicle transition capability, a monetary cost of one or more respective autonomous vehicles to navigate the respective route, or a number of autonomous vehicles selected for the respective route.

12. The method according to claim 10, further comprising:
performing a normalization of at least a portion of the historical route traversal data prior to the determination of the personalized vehicle recommendation for the user.

13. The method according to claim 10, further comprising:
determining a minimum amount of historical route traversal data to be used in the determination of personalized vehicle recommendation for the user.

14. The method according to claim 10, further comprising:
in accordance with a determination that the historical data of the user fails to satisfy a predefined threshold:
determining one or more user profiles of one or more other users based upon a relationship between user profile data of the user and user profile data of the one or more other users,
wherein determining the personalized vehicle recommendation for the user is further based on historical route traversal data associated with the one or more user profiles.

15. An apparatus according to any preceding apparatus claims wherein the apparatus is configured to cause the apparatus to at least:
provide a training dataset comprising a plurality of historical data associated with a user to a machine learning model, wherein the historical data relates to prior vehicle selections including historical data relating to an autonomous transition tolerance to changes in autonomy level of a vehicle during traversal of a route; and
train the machine learning model utilizing the training dataset such that the machine learning model, as trained, is configured to determine a personalized vehicle recommendation of an autonomous vehicle for the user.
